(19) Europäisches Patentamt / European Patent Office / Office européen des brevets

(11) EP 4 712 429 A1

(12) EUROPEAN PATENT APPLICATION

(43) Date of publication:
18.03.2026 Bulletin 2026/12

(21) Application number: 25197964.7

(22) Date of filing: 25.08.2025

(51) International Patent Classification (IPC):
H04L 45/00 (2022.01)    H04W 40/12 (2009.01)

(52) Cooperative Patent Classification (CPC):
H04W 40/12; H04L 45/22

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 17.09.2024 US 202418887994

(71) Applicant: GE Precision Healthcare LLC
Waukesha, WI 53188 (US)

(72) Inventors:
• LAINE, Tuomas Valtteri
  00510 Helsinki (FI)
• PEKARSKE, Matthew Richard
  Milwaukee, 53223 (US)

(74) Representative: Kilburn & Strode LLP
Lacon London
84 Theobalds Road
Holborn
London WC1X 8NL (GB)

(54) **SYSTEMS AND METHODS FOR NETWORK PATH SELECTION USING CONTINUOUS STATISTICAL QUALITY METRICS**

(57) Systems and methods for network path selection are herein provided. In one example, a method comprises determining, for each device of one or more devices, connection quality indicators (CQIs) for one or more available network connection paths; and connecting each device to a server via a respective network connection path with a highest CQI of the one or more available network connection paths.

FIG. 1

**Description**

FIELD

Embodiments of the subject matter disclosed herein relate generally to network communications, and in particular to selecting network paths using continuous statistical quality metrics.

BACKGROUND

Network environments, such as hospital network environments, use wireless local area network (WLAN) connections or local area network (LAN) connections (e.g., wired connections) to transmit and receive information among elements of the network. Mobile clients such as wireless handheld devices may be wirelessly connected to the network via a WLAN connection or via a LAN connection based on a predefined hierarchy of connections. For example, path selection to a wireless or wired connection may be performed using a static prioritization of the available connections. However, with a static prioritization for path selection, connection quality of the selected path is not measured and thus variability in communication paths in networks can result in intermittent quality issues. For example, link failures, congestion delays, data losses, disconnections, and the like may affect connection quality without resulting in a change in path selection.

BRIEF DESCRIPTION

In one example, a method comprises determining, for each device of one or more devices, connection quality indicators (CQIs) for one or more available network connection paths; and connecting each device to a server via a respective network connection path with a highest CQI of the one or more available network connection paths. CQIs may be determined continuously by each device for each available network path such that a path order is continuously updated. Based on the repeatedly updated path order, each device may connect to the server based on a path with the highest connection quality.

It should be understood that the brief description above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

BRIEF DESCRIPTION OF THE DRAWINGS

The present invention will be better understood from reading the following description of non-limiting embodiments, with reference to the attached drawings, wherein below:

FIG. 1 is a schematic block diagram of a network system including a plurality of devices in communication with a network server;
FIG. 2 is a schematic diagram of available connection paths between a device and a server;
FIG. 3 is a flowchart illustrating a method for network path selection using statistical quality metrics;
FIG. 4 is a flowchart illustrating a method for a wireless local area network (WLAN) link state change;
FIG. 5 is a flowchart illustrating a method for a local area network (LAN) link state change;
FIG. 6 is a flowchart illustrating a method for path connection quality monitoring;
FIG. 7 is a flowchart illustrating a method for updating path connection based on determined quality metrics; and
FIG. 8 is a flowchart illustrating a method for adaptive logging in a network system.

DETAILED DESCRIPTION

The following description relates to various embodiments of network path selection using continuous statistical quality metrics. In certain environments, such as hospital or healthcare facilities, data transfer may be accomplished in part using mobile devices, such as computer monitors, tablets, and smart phones, which are connected to a central server over a network. For example, in a hospital facility, care providers may utilize mobile devices for accessing acquired patient information (e.g., physiological information, demographic information, etc.). The mobile devices may have multiple available network connectivity interfaces, such as a local area network (LAN) (e.g., Ethernet or other wired network), a wireless local area network (WLAN) (e.g., Wi-Fi), and a wide area network (WAN) (e.g., cellular network).

As the mobile device is moved about the environment, data is received at the mobile device according to a current network path. Traditionally, network path selection is based on predefined hierarchy of available network connections. For example, when a mobile device is docked (e.g., connected via Ethernet), connected to Wi-Fi, and has access to cellular data, the device selects one of the available network connections based on predefined, static prioritizations. In one example, Ethernet (or other LAN connections) may be prioritized over Wi-Fi (or other WLAN connections), which may in turn be prioritized over cellular data (or other WAN connections). Thus, when Ethernet, Wi-Fi, and cellular data connections are available to the mobile device, based on the predefined prioritization, the mobile device will connect to the server via the Ethernet connection.

While predefined, static prioritization hierarchies such as herein described are configured to prioritize what is usually the better (e.g., more reliable, faster, etc.) connection, LANs and WLANs remain inherently prone to network quality issues. For example, communication paths are highly variable and thus may have intermittent poor quality due to link failures, congestion, delays, data losses, disconnections, security policies, routing changes, and network configuration changes. While predefined network path selection strategies such as static prioritizations may check availability from link state and sometimes use an additional singular connectivity test after a link state change, they do not account for this connection variability or monitor connection quality continuously.

Systems and methods are thus provided herein for network path selection using continuous statistical connection quality metrics that at least partially addresses the aforementioned issues. For example, available network interfaces for a plurality of devices, such as LAN interfaces and WLAN interfaces, may independently and continuously calculate statistical metrics indicative of quality. The system may be a client-server model whereby each device comprises a client that polls the server periodically to calculate the statistical connection quality metrics. As an example, the system may be incorporated in a hospital environment wherein multiple devices, such as mobile smart phones, tablets, laptop computers, desktop monitors with either individual computing devices or a central computing device with distributed interfaces, and the like are each connected to a central server. Each device may calculate a connection quality indicator (CQI) based on the quality metrics for the available network interfaces. Based on the CQI for each available network interface, a path order can be determined that orders the available connection interfaces based on their current quality. Thus, by determining current connection quality for available network interfaces, mobile devices may be connected to the server over the currently most reliable and quickest network connection, thereby reducing interruptions to the connection and therefore user experience resulting from drops in connection resulting from link failures, congestion, and the like.

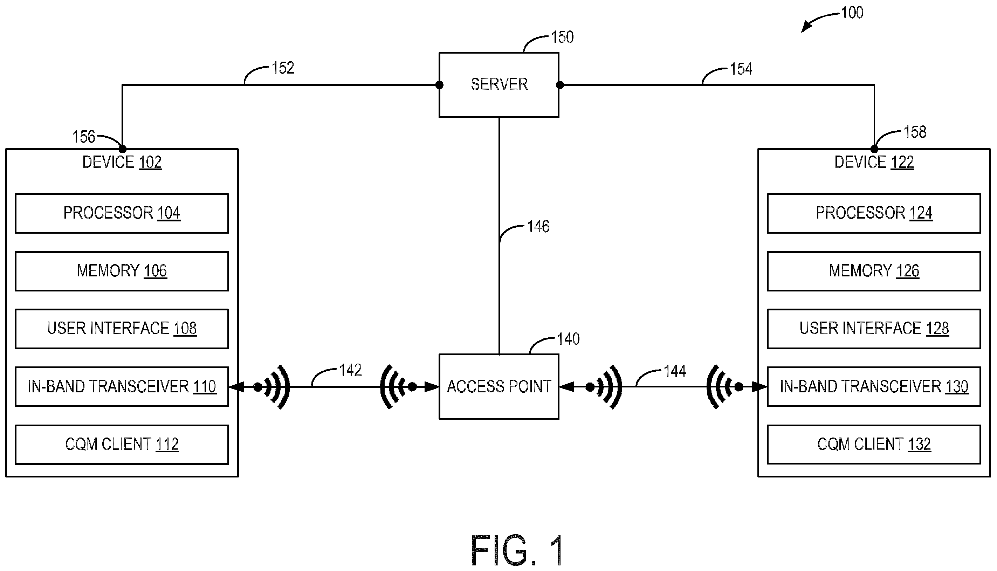

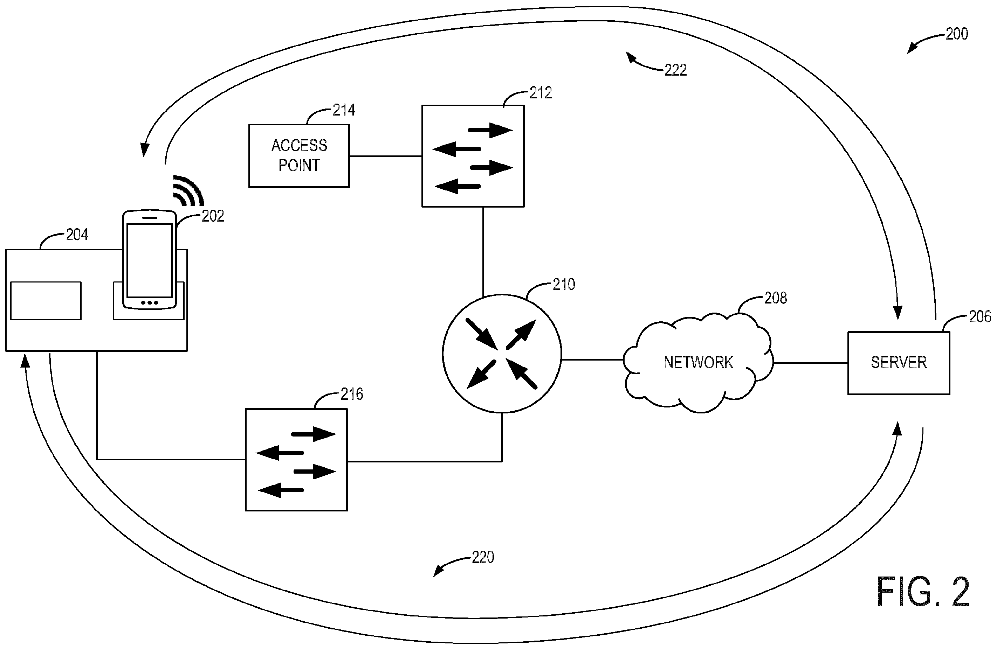

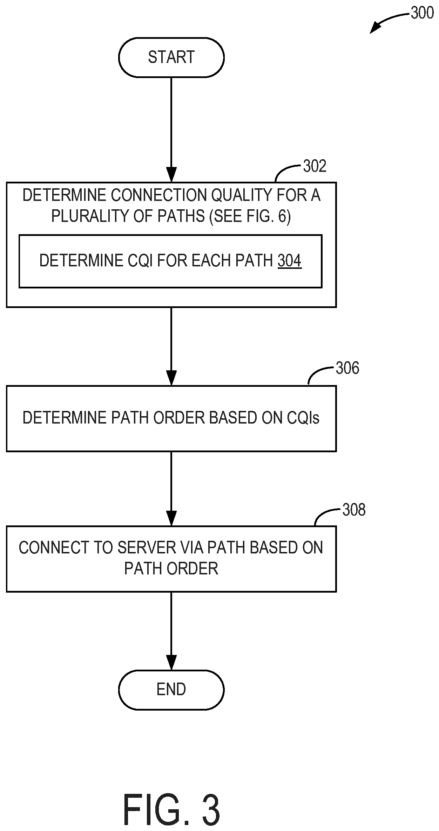

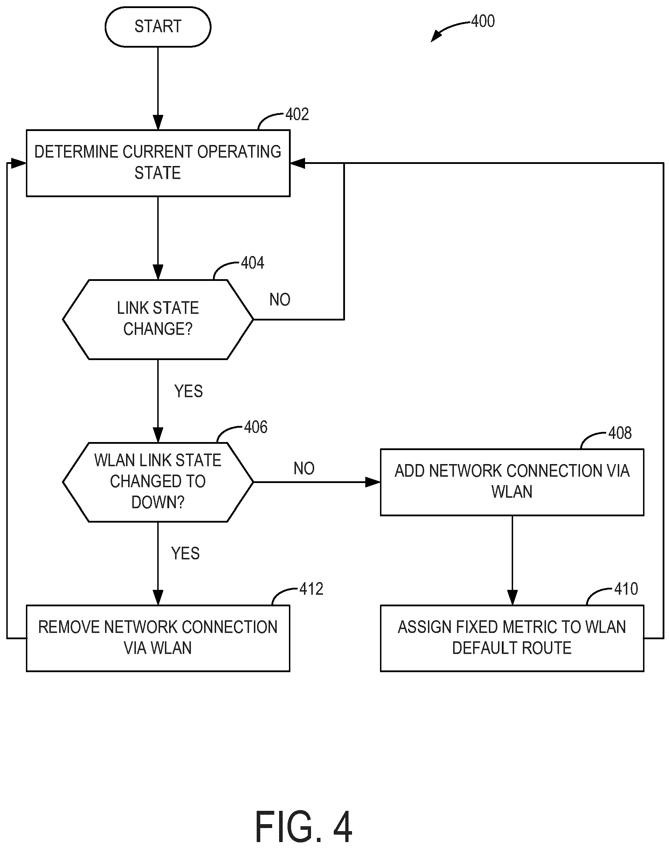

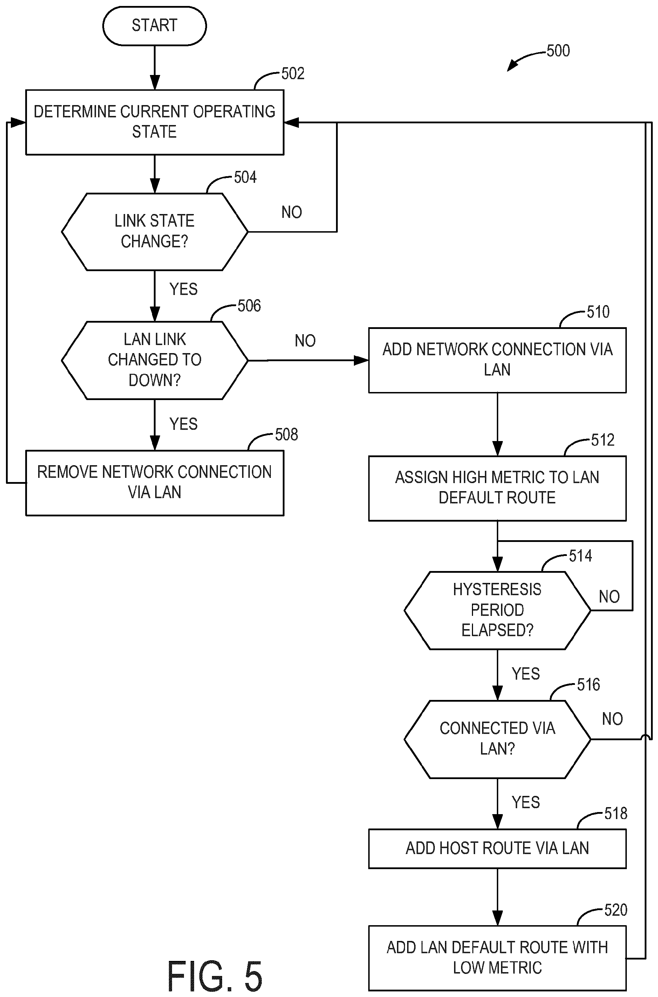

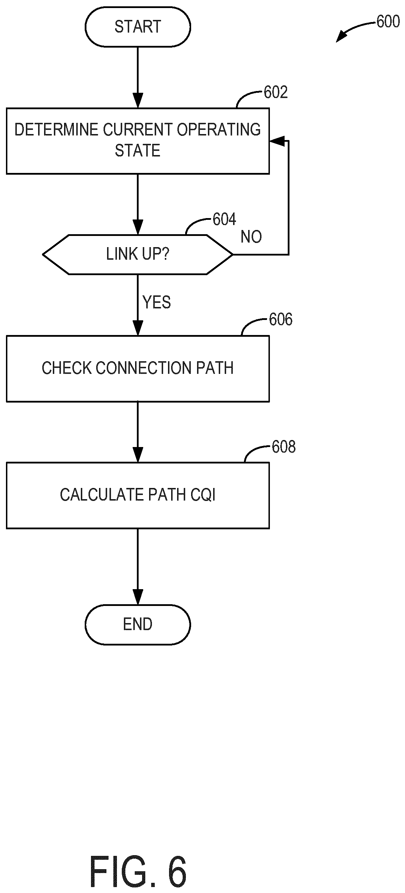

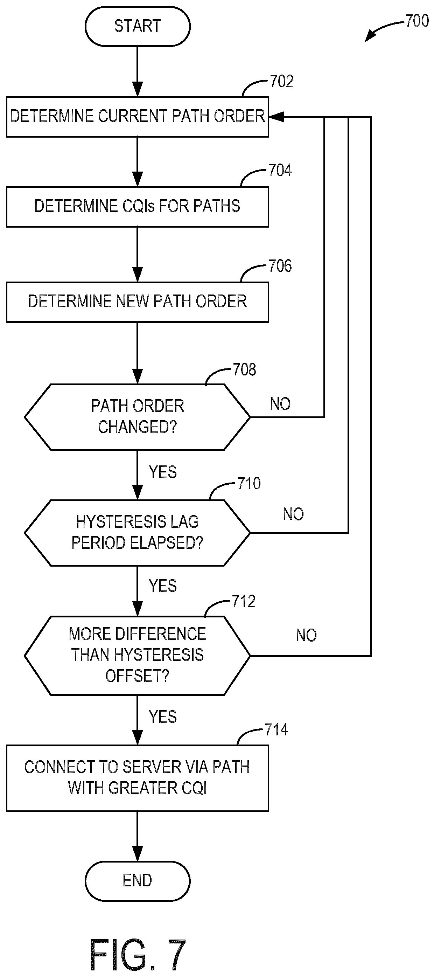

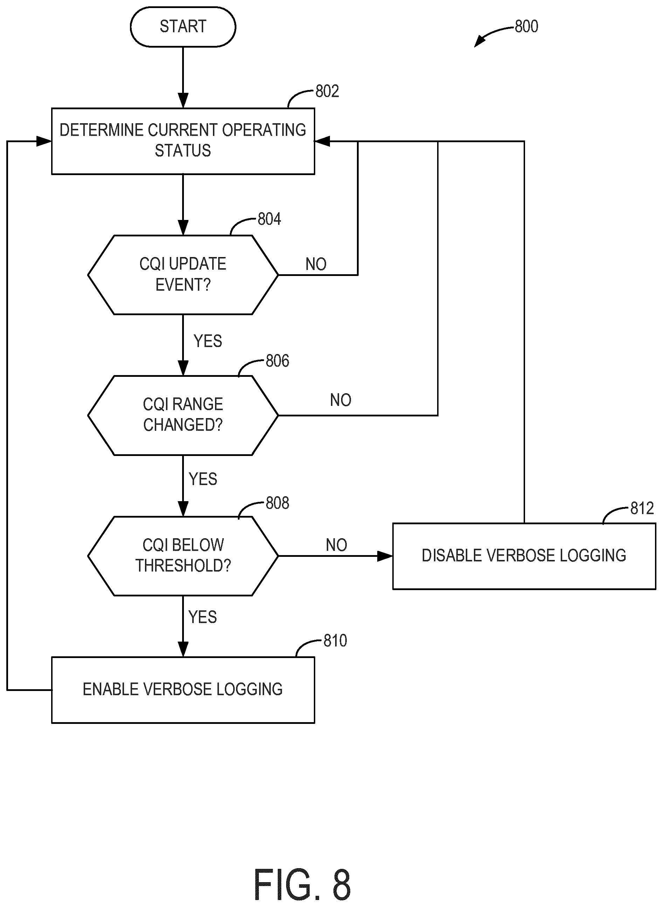

The systems and methods will now be described, by way of example, with respect to the figures, wherein FIG. 1 shows a diagram of an exemplary network system, FIG. 2 shows a diagram of available connection paths between a device and a server of a network system, FIG. 3 shows a flowchart illustrating a method for network path selection using statistical connection quality metrics, FIG. 4 is a flowchart illustrating a method for a wireless local area network (WLAN) link state change, FIG. 5 is a flowchart illustrating a method for a local area network (LAN) link state change, FIG. 6 is a flowchart illustrating a method for calculating quality metrics for a given communication path, FIG. 7 is a flowchart illustrating a method for updating path connection based on determined quality metrics, and FIG. 8 is a flowchart illustrating a method for adaptive logging in a network system.

Starting with FIG. 1, a network system 100 is shown. The network system 100 comprises a plurality of devices, such as first device 102 and second device 122, each connected to a server 150. The network system 100 may be a client-server model system, in some examples. The network system 100 may exist in an environment with the plurality of devices and the server in the client-server model, such as a hospital or healthcare system.

Each of the first device 102 and the second device 122 may be mobile or other wireless capable devices. For example, the first and second devices 102, 122 may be smart phones, tablets, monitors, or the like. Each of the first device 102 and the second device 122 may comprise a processor, memory, a user interface, an in-band transceiver, and a connection quality monitoring (CQM) client. For example, the first device 102 may comprise a processor 104, non-transitory memory 106, user interface 108, in-band transceiver 110, and CQM client 112 and the second device 122 may comprise processor 124, non-transitory memory 126, user interface 128, in-band transceiver 130, and CQM client 132.

As an example, when the network system 100 is in a hospital environment, the plurality of devices may be configured to store in memory or otherwise access electronic medical records (EMRs), imaging systems such as picture archiving and communication systems (PACS) and/or radiology information systems (RIS), laboratory systems, data retrieved from telemetry systems or other systems or sensors that acquire data of a patient including vital signs, ECG data, and the like. The plurality of devices may access such systems by transmitting data to the server 150 and receiving data from the server 150. As such, each device may be connected to the server 150 via a network connection path as will be herein described.

The processor 104 and/or the processor 124 may control operation of the respective first and/or second device 102, 122 in response to control signals from the respective user interface 108 and/or 128. In some examples, the user interfaces 108, 128 may be integrated into the corresponding first or second device 102, 122, where users may interact with, adjust, or select control elements in respective user interfaces (e.g., buttons, knobs, touchscreen elements, etc.) to send one or more control signals to the respective processor. In other examples, the user interfaces 108, 128 may be incorporated into remote devices separate from the first and second devices 102, 122 and the user may interact with, adjust, or select control elements within the user interfaces 108, 128 via a separate user input device, such as a mouse, track ball, touchpad, etc. Additionally or alternatively, users may interact with the user interfaces 108, 128 via separate touchscreens, where users touch a display screen displaying the user interfaces 108, 128, to interact with the user interfaces 108, 128, or via another type of input device. In some examples, the first device 102 may comprise a user interface of a first type, for example an integrated touch screen, and the second device 122 may comprise a user interface of a second type, for example a separate input device such as a mouse. As a non-limiting example, the first device 102 may be a smart phone and the second device 122 may be a table with a connected separate input device (e.g., connected via Bluetooth, USB, or the like).

The processor 104 and the processor 124 may execute instructions stored on the memory 106 and the memory 126, respectively, to control the first device 102 and the second device 122, respectively. As discussed herein, the memory 106 and the memory 126 may include any non-transitory computer readable medium in which programming instructions are stored. For the purposes of this disclosure, the term "tangible computer readable medium" is expressly defined to include any type of computer readable storage. The example methods and systems herein disclosed may be implemented using coded instructions (e.g., computer readable instructions) stored on a non-transitory computer readable medium such as a flash memory, a read-only memory (ROM), a random-access memory (RAM), a cache, or any other storage media in which information is stored for any duration (e.g., for extended time periods, permanently, brief instances, for temporarily buffering,, and/or for caching of the information). Computer memory of computer readable storage mediums as referenced herein may include volatile and non-volatile or removable and non-removable media for storage of electronic-formatted information such as computer readable program instructions or modules of computer readable program instructions, data, etc. that may be stand-alone or as part of a computing device. Examples of computer memory may include any other medium which can be used to store the desired electronic format of information and which can be accessed by the processor or processors or at least a portion of a computing device. In various examples, the memory 106 and/or the memory 126 may include an SD memory card, an internal and/or external hard disk, USB memory device, or similar modular memory.

Program code embodied on a computer readable medium may be transmitted using any appropriate medium, including but not limited to wireless, wireline, optical fiber cable, RF, etc., or any suitable combination of the foregoing. Computer program code for carrying out operations for aspects of the present invention may be written in any combination of one or more programming languages, including an object-oriented programming language such as Java, Smalltalk, C++, or the like and conventional procedural programming languages, such as the "C" programming language or similar programming languages. The program code may execute entirely on the user's computer and partly on a remote computer or entirely on the remote computer or server. In the latter scenario, the remote computer may be connected to the user's computer through any type of network, including LAN, WAN, or WLAN, or the connection may be made to an external computer (e.g., through the Internet using an Internet Service Provider).

The in-band transceiver 110 and the in-band transceiver 130 may each be or may each include a WLAN wireless card. In some examples, the WLAN card may be an original equipment manufacturer (OEM) card, and may include a storage medium having computer executable code and a processor to execute that code, thus effectuating the operation of the WLAN card so as to enable the first and second devices 102, 122 to be WLAN capable devices.

For example, the first and second devices 102, 122 may use the in-band transceivers 110, 130, respectively, to selectively connect to the server 150 via a WLAN connection via an access point (AP) 140. AP 140 may have a transmitter and a receiver, or a transmitter/receiver (e.g., a single device with transmitting and receiving capabilities). In some examples, AP 140 may be an AP that is in close proximity to each of the first and second devices 102, 122. For example, in the environment, multiple APs may be positioned in various locations and each of the plurality of devices may be in communication with one of the APs based on proximity. As an example, the in-band transceiver 110 of the first device 102 may selectively connect to the AP 140 over a first WLAN connection 142 and the in-band transceiver 130 of the second device 122 may selectively connect to the AP 140 over a second WLAN connection 144. The AP 140 may further connect to the server 150 over a wired connection 146.

While FIG. 1 shows the first device 102 and the second device 122 connected to the same AP 140, it should be understood that in other examples, the first device 102 may be connected to a first AP and the second device 122 may be connected to a second, different AP. In such examples, both the first and second AP may be connected to the server 150 independently via the WLAN interface. In some examples, when multiple devices are connected to the same AP, congestion may occur and thus adversely affect latency and reliability of data transmission between the devices and the server 150. Thus, for some devices, connecting to the server 150 via the WLAN path may be more reliable and faster, but for other devices, connecting to the server 150 via a different path, such as LAN or WAN may be more reliable and faster than WLAN.

The first device 102 and the second device 122 may each also be LAN capable devices. For example, the first device 102 may establish a first wired connection 152 with the server 150 and/or the second device 122 may establish a second wired connection 154 with the server 150. For example, the first device 102 may be configured with a first connection port 156 and the second device 122 may be configured with a second connection port 158. The first and second connection ports 156 may be configured to receive respective wiring to establish the first and second wired connections 152, 154, respectively. As an example, the first and second connection ports 156, 158 may be Ethernet ports configured to receive a connector of an Ethernet cord or a connector of an Ethernet capable charger (e.g., a LAN charger) station.

The first and second devices 102, 122 may be devices configured to maintain connection to multiple network connection paths while using only one of the available paths to transmit data. For example, as is herein described, the first and second devices 102, 122 may be configured to maintain connection to both WLAN and LAN while transmitting data over only one of WLAN or LAN based on connection quality thereof. The paths for which connection is maintained may be considered available paths and may thus have CQIs determined therefor even when not actively in use.

The CQM client 112 of the first device 102 and the CQM client 132 of the second device 122 may each be configured with instructions stored in memory (e.g., memory 106 and memory 126, respectively) for calculating a CQI for each available network path (e.g., connection interface), determining a path order, and adjusting path connection based on the path order. For example, the first device 102 may have available paths including WLAN and LAN, as herein described. The CQM client 112 of the first device 102 may calculate a first CQI for the WLAN path and a second CQI for the LAN path. Based on the calculated first and second CQIs, the CQM client 112 may determine a path order for the first device 102, as will be further herein described. If the determined path order is a change from the previous path order, the CQM client 112 may also initiate adjustment of path connection. For example, the first device 102 may be connected to the server 150 via a WLAN connection (e.g., via the in-band transceiver 110 and the AP 140 as herein described) and a determined path order based on calculated CQIs may indicate a path order with the LAN path prioritized over the WLAN path. Thus, the CQM client 112 may initiate a link state change to trigger disconnection of the WLAN path and connection of the LAN path.

Similarly, the CQM client 132 of the second device 122 may calculate CQIs for each of its available network connection paths, determine a path order, and initiate link state change events when the determined path order is different from a current operating state. In some examples, the CQM clients 112 and 132 first device 102 and the second device 122, respectively may determine different path orders for their available network connections paths. Thus, the first device 102 may be connected to the server by a first connection path type and the second device 122 may be connected to these server via a second connection path type. For example, the first device 102 may be connected to the server over a LAN path and the second device 122 may be connected to the server over a WLAN path, based on respective determined path orders based on calculated CQIs by the respective CQM clients.

In order to determine CQIs of available network connection paths, each CQM client may continuously periodically poll the server 150 (e.g., at regular, predefined intervals). A plurality of connection characteristics, including reliability and latency, may be determined based on the signals in the poll. For example, reliability may be a ratio of delivered data to sent data, which may indicate probability of intermittent problems such as link failures, delays, buffer overflows, and security policies. In particular, in the context where a plurality of medical devices are involved such as a hospital settings as noted herein, and further where the systems are connected to a medical patient database, such as an EMR, and a PACs system, data security issues may be prioritized to a greater extent than a public or other private network, and as such, the reliability may be weighted more heavily to prioritize data security. For example, the sent data may be recorded by the CQM client of the given device and the delivered data may be polled from the server, thereby indicating what of the sent data was successfully delivered to the client. Latency may be the time for data delivery, including time of processing, queuing, transmission, and propagation. High latency may indicate slow links, high congestion, or long distance between device and server. Latency may be measured at the CQM client as a round trip time from initial transmission to receiving of confirmation. Reliability and latency may be determined as statistical connection quality metrics that may be used to determine the CQI, which may also be a statistical metric.

In this way, based on performance, as determined by statistical connection quality metrics, of each available network connection path, the CQM clients herein described may identify a prioritization order of the available paths (e.g., a path order). The path order that is determined may thus take into account the current performance of each path, thus allowing for a more reliable, faster network connection of a given device.

As a use-case example, in a hospital environment, the plurality of devices may be connected to the server 150. Each device may have active connections to the server 150 via WLAN and LAN paths. As described above, each device may access or otherwise retrieve data from medical data repositories like EMRs, PACS, RIS, and the like using one of the available paths. In practice, devices may send real-time data to the central server and to central viewers. Users may view data retrieved from the medical data repositories to monitor patient status, make diagnoses, execute orders, and the like. However, when multiple devices are connected to the server via the same path, for example via WLAN through the same AP, network connectivity issues can occur. For example, congestion may occur as a result of multiple devices accessing the server over the same network connection path and also from the combined effect of sharing links with all network clients. When such network connection quality issues occur, users, such as physicians, nurses, technicians, and more may have difficulty accessing the data from the medical data repositories, which may lead to delays in patient care. In this way, by assessing connection quality via continuously determined statistical metrics and connecting to the server via a path with the highest metric, and thus highest connection quality, for each individual device in the distributed client-server network system, the network connectivity for the hospital environment may be increased as a whole. Namely, with continuous real-time critical data sent upstream in the system, continuously monitoring connection quality and updating network connection paths based thereon increases the overall speed and reliability of such real-time data transfer. With increased network connectivity quality within the hospital environment, delays in patient care due to network connection issues may be reduced. Further, with speed and reliability increased, overall demanded processing power for the server and the devices may be reduced by decreasing the effort demanded to retrieve and transmit data.

Turning now to FIG. 2, a communication flow diagram illustrating available network connection paths of a network system 200 is shown. The network system 200 may be similar to the network system 100 described with respect to FIG. 1. The network system 200 comprises a device 202 connected to a server 206.

The device 202 may connect to the server 206 via a WLAN interface or via a LAN interface. For example, the device 202 may be docked on a LAN charger 204 that is configured to provide LAN connection capabilities to connected devices. The LAN charger 204 may be connected to a router 210 via a wired connection 216. The router 210 may connect to a network infrastructure 208, which connects to the server 206. The device 202 may also be configured to wirelessly connect to an AP 214. Similar to as described with respect to FIG. 1, the AP 214 may have a transmitter and a receiver (or a transmitter/receiver single device) that facilitates wireless connection between the device 202 and the router 210. For example, the AP 214 may be connected to the router 210 via a wired connection 212. As noted, the router 210 may be connected to the network infrastructure 208 and thus to the server 206. In the example presented, the device 202 may have available network connection paths including WLAN and LAN, though it should be understood that the device 202 may have other available network connection paths as well.

When the device 202 is connected to the server 206 via the LAN path, data may be sent to the server and received from the server according to the LAN path protocol, as denoted by first data transmission lines 220. When the device 202 is connected to the server 206 via the WLAN path, data may be sent to the server and received from the server according to the WLAN path protocol, as denoted by second data transmission lines 222.

It should be understood that while WLAN connection via access points is herein described in FIG. 1 and FIG. 2, other configurations and protocols for WLAN connection may be utilized without departing from the scope of this disclosure. For example, the devices herein discussed may connect directly to a router without an intermediary access point.

Turning now to FIG. 3, a flowchart illustrating a high-level method 300 for network path selection is shown. The method 300 may be executed by one or more processors of a device according to instructions stored in non-transitory memory of a device. For example, the method 300 may be executed by processor 104 according to instructions from CQM client 112 stored in non-transitory memory 106 of the first device 102. As an example, the device may be one of a plurality of devices in a distributed network system wherein multiple devices are connected to a central server. The distributed system may be incorporated into a hospital environment, in some examples, where each device is a care provider device configured to access one or more medical data repositories storing patient medical data. Further, it should be understood that while the method 300 is herein described for a given device, the method 300 may be executed by multiple devices within the same environment at the same time.

At 302, method 300 includes determining connection quality for a plurality of available network connection paths. Determining connection quality for each of the plurality of paths may include calculating CQIs for multiple available network connection paths, as noted at 304. For example, the device may be configured for WLAN connection and LAN connection via respective interfaces. The device, via the CQM client thereof, may calculate a CQI for each of the available paths. As a non-limiting example, CQI may be calculated according to equation (1):

$$CQI = RI \times LI \qquad (1)$$

where RI is a reliability indicator and *LI* is a latency indicator. Indicators, as herein referenced, may values that represent relative quality levels. The CQI may be a value between 0 and 1, whereby a value of 1 indicates perfect connection (e.g., all sent data is delivered at minimum latency) and a value of 0 indicates unacceptable quality (e.g., as a result of lack of data delivery, high latency, or the like). The *RI* is given in equation (2):

$$RI = \frac{delivered\ data}{sent\ data} \qquad (2)$$

and *LI* is given in equation (3):

$$LI = \frac{avgLI + minLI}{2} \qquad (3)$$

wherein *avgLI* is average latency indicator, given in equation (4) below, and *minLI* is minimum latency indicator, given in equation (5) below.

$$avgLI = 1 - \frac{average\ latency}{latency\ threshold} \qquad (4)$$

$$minLI = 1 - \frac{minimum\ latency}{latency\ threshold} \qquad (5)$$

The latency threshold may be the maximum allowed time for data delivery. Data may be considered lost (e.g., not delivered) after the latency threshold has expired. Average latency may be determined over a predefined period of time. In some examples, the period of time may be considered on a sliding window. The minimum latency may be sampled from the predefined period of time for which the average latency is determined, in some examples.

It should be understood that the implementation details provided above and in equations (1)-(5) are exemplary in nature and different implementations and formulas may be executed by other devices in the same system without departing from the scope of this disclosure. For example, in other instances, throughput, jitter, errors and delivery order may also be considered when determining the CQI for a path.

As described with respect to FIG. 1, the CQM client of the device may periodically poll the server in order to acquire the information to determine the CQI, including latency data, delivery data, and the like. For example, the CQM client may poll the server at regular intervals and may retain a sliding window of previous responses from the server, for example to allow for calculation of the average and minimum latency described above. As will be further described with respect to FIG. 6, a CQI may be determined for a path when the path is available for connection.

At 306, method 300 includes determining a path order based on the CQIs. The device may be configured to connect to the server via multiple available network connection paths, such as WLAN and LAN. As noted, CQIs may be calculated for each respective available network connection path. CQIs may be calculated as values between 0 and 1. The path order may be determined according to CQI value, wherein available connection paths with higher CQIs are prioritized higher than available connection paths with lower CQIs. For example, a WLAN path may have a first CQI of 0.75 and a LAN path may have a second CQI of 0.65. The path order may thus have WLAN as a first priority path and LAN as a second priority path, whereby the device will connect to the server over the WLAN path at a higher priority over the LAN path.

At 308, method 300 includes connecting the device to the server via a path based on the path order. The path may be the path with the highest CQI value, which may be the path that tops the path order (e.g., is of highest priority based on the path order).

In some examples, the path order that is determined based on the current CQIs may be different than a previously defined path order. For example, the device may be connected to the server via a LAN connection at a first time. Between the first time and a second, later time, CQIs may be calculated for both WLAN and LAN that determine a second path order than prioritize WLAN connection over LAN connection.

In such examples connecting to the server via a path based on the path order includes updating the path connection based on the path order. As will be further described with respect to FIG. 7, a current path order may be compared to a newly determined path order based on newly calculated CQIs and if the path order is changed, the CQM client may recommend to the system to connect via the path with the greater CQI. CQIs may be calculated for a path when the link state for that path is up (e.g., the path is available to the device). An exemplary method for WLAN link state change is given in FIG. 4. An exemplary method for LAN link state change is given in FIG. 5.

The method 300 may be executed in a continuous or iterative manner, whereby CQIs are continuously determined based on continuously acquired data from the server and internally recorded data. Thus, the path order may be continuously determined. As an example, the path order may be updated with each polling iteration. Thus, up to date path orders and thus up to date connections according to connection quality may be used, thereby reducing instances of connection issues, link failures, and decreasing overall transmission latency for the device.

Turning now to FIG. 4, a flowchart illustrating a method 400 for WLAN link state change handling is shown. The method 400 may be executed by one or more processors of a device according to instructions stored in non-transitory memory of a device. For example, the method 400 may be executed by processor 104 according to instructions stored in non-transitory memory 106 of the first device 102. As an example, the device may be one of a plurality of devices in a distributed network system wherein multiple devices are connected to a central server. The distributed system may be incorporated into a hospital environment, in some examples, where each device is a care provider device configured to access one or more medical data repositories storing patient medical data. Further, it should be understood that the method 400 herein described may be executed by multiple devices within the same environment at the same time.

At 402, method 400 includes determining a current operating state of the device. The operating state may include a current link state of the device, which may indicate which network connection path is currently in use. For example, the operating state may indicate that a WLAN path is currently connected or not connected. If not connected, another network connection path may be in use, such as LAN or WAN. In some examples, the WLAN path may be connected but another connection path, such as LAN may be in use for data transmission as the device is configured to maintain multiple connection paths at the same time.

At 404, method 400 includes determining whether a link state change is indicated for the WLAN path. As described with respect to method 300, a link state change may be indicated when there is a change in association status (e.g., the establishing or disestablishing of connection to an AP). The link state change may either be up or down, whereby a link state change up indicates that the WLAN link is to change from disconnected to connected and a link state change down indicates that the WLAN link is to change from connected to disconnected. If a link state change is indicated (YES at 404), method 400 proceeds to 406. If a link state change is not indicated (NO at 404), for example when baseline operation continues, the method 400 returns to 402 to again determine current operating state.

At 406, method 400 includes determining whether the WLAN link state is changed to down. In examples when the WLAN path is currently connected and a link state change indicates that the WLAN is to change to disconnected, the WLAN link state change may be down. In examples when the WLAN path is currently disconnected and a link state change indicates that the WLAN path is to be connected, the WLAN link state change may be up. If the WLAN link state change is down (YES at 406), method 400 proceeds to 412. If the WLAN link stat change is up (NO at 406), method 400 proceeds to 408.

At 408, method 400 includes adding a network connection via WLAN. Connecting via WLAN may include wirelessly connecting to a router via an AP, as described with respect to FIG. 1. The router may be in wired connection to the server via a network infrastructure.

At 410, method 400 includes assigning a fixed metric to the WLAN default route. The default route, as explained with respect to FIG. 2, refer to the routing path. The fixed metric may be a value that represents the priority of using that routing path over other potential paths.

At 412, in response to a down WLAN link state change, method 400 includes removing the network connection via WLAN. Removing the connection via WLAN, in some examples, may include deleting all WLAN routes. When WLAN is connected, one or more routes, including a default route and/or alternative routes may be available to connect the device to the server over the WLAN. Disconnecting from WLAN may include deleting the routes, including the defined default route.

In this way, when a link state change event occurs, a WLAN path may be adjusted according to the defined state change. WLAN link state changes may be executed in real time according to link state changes events. Further, the method 400 may be executed in a continuous manner, whereby current operating state is determined repeatedly and once a link state change is indicated, the method proceeds to execute the link state change before again returning to determine the current operating state.

Turning now to FIG. 5, a flowchart illustrating a method 500 for LAN link state change handling is shown. The method 500 may be executed by one or more processors of a device according to instructions stored in non-transitory memory of a device. For example, the method 500 may be executed by processor 104 according to instructions stored in non-transitory memory 106 of the first device 102. As an example, the device may be one of a plurality of devices in a distributed network system wherein multiple devices are connected to a central server. The distributed system may be incorporated into a hospital environment, in some examples, where each device is a care provider device configured to access one or more medical data repositories storing patient medical data. Further, it should be understood that the method 500 herein described may be executed by multiple devices within the same environment at the same time.

At 502, method 500 includes determining a current operating state of the device. The operating state may include a current link state of the device, which may indicate which network connection path is currently in use. For example, the operating state may indicate that a LAN path is currently connected or not connected. If not connected, another network connection path may be in use, such as WLAN or WAN. In some examples, the LAN path may be connected but another connection path, such as WLAN may be in use for data transmission as the device is configured to maintain multiple connection paths at the same time.

At 504, method 500 includes determining whether a link state change is indicated for the LAN path. As described with respect to method 300, a link state change may be indicated when a path order is changed. The link state change may either be up or down, whereby a link state change up indicates that the LAN link is to change from disconnected (or otherwise not in use) to connected (or otherwise in use) and a link state change down indicates that the LAN link is to change from connected to disconnected. If a link state change is indicated (YES at 504), method 500 proceeds to 506. If a link state change is not indicated (NO at 504), for example when the path order is not changed, the method 500 returns to 502 to again determine current operating state. As described above, path order may be continuously determined and thus the system may iteratively determine operating state and whether a link state change is indicated based on path order, executing changes based on changes in path order when indicated.

At 506, method 500 includes determining whether the LAN link is changed to down. Similar to as described above, in examples when the LAN path is currently in use (e.g., connected) and a path order change indicates that another path is to be prioritized over the LAN path, the LAN link state change may be down. In examples when the LAN path is not currently in use (e.g., disconnected) and a path order change indicates that the LAN path is to be prioritized over other paths, the LAN link state change may be up. If the LAN link state change is down (YES at 506), method 500 proceeds to 508. If the LAN link stat change is up (NO at 506), method 500 proceeds to 510.

At 510, method 500 includes, in response to an up LAN link state change, adding a network connection via LAN. Connecting via LAN may include initiating LAN protocols over the established wired connection. In some examples, connecting to LAN may include adding a Dynamic Host Configuration Protocol (DHCP) default route and a connected route to the LAN.

At 512, method 500 includes assigning a high metric to a LAN default route. The high metric may be added to temporarily have added cost of the LAN default route before the CQI is determined.

At 514, method 500 includes determining whether a hysteresis period has elapsed. The hysteresis period may be a pre-defined period of lag, whereby the state change may not be performed until after the hysteresis period is elapsed. In effect, the hysteresis period reduces rapid cycling between network paths due to frequent changes in connectivity. If the hysteresis period has not elapsed, the method 500 waits (e.g., returning to the transition between 512 and 514 to again determine if the period has elapsed). Once the period has elapsed, method 500 proceeds to 516.

At 516, method 500 includes determining if the device is connected via LAN. The device may perform an internal check to confirm connection to the server via LAN based on instructions stored in its memory. If the device is connected, method 500 proceeds to 518. If the device is not connected via LAN, method 500 returns to 502 to again determine the current operating state. In some examples, the network path may be unavailable even if the LAN link is up.

At 518, method 500 includes adding a host route via LAN. Generally, the host route may be a type of routing entry that directs network traffic to a specific, individual IP address rather than to the whole network or subnet. For example, the host route may be the route that specifies the particular destination IP address of the device or of the router to which the device is connected and a corresponding next interface to reach the host. Thus, any packets of data destined for that specified IP address will be routed according to the host route.

At 520, method 500 includes adding a LAN default route with a low metric. The LAN default route with the low metric may essentially be a fallback route for the device. The low metric may indicate the route as a preferred route of available default routes. Once the LAN default route with the low metric is added, the method 500 returns to 502 to again determine current operating state. In this way, similar to the method 400, the method 500 may be a continuous method that is repeated in an iterative manner. As such, the device may continuously monitor for link state change indications and execute link state changes as they are detected.

At 508, method 500 includes, in response to a down LAN link state change, removing the network connection via WLAN. Removing the network connection via LAN, in some examples, may include deleting all LAN routes. When LAN is connected, one or more routes, including a default route and/or host routes may be available to connect the device to the server over the LAN. Disconnecting from LAN may include deleting the routes, including the defined default route. Once disconnected, the method 500 returns to 502 to again determine current operating state and repeat method 500 as described above in response to indications for link state changes.

Turning now to FIG. 6, a flowchart illustrating a method 600 for determining connection quality of a network connection path is shown. The method 600 may be executed by one or more processors of a device according to instructions stored in non-transitory memory of a device. For example, the method 600 may be executed by processor 104 according to instructions stored in non-transitory memory 106 of the first device 102. As an example, the device may be one of a plurality of devices in a distributed network system wherein multiple devices are connected to a central server. The distributed system may be incorporated into a hospital environment, in some examples, where each device is a care provider device configured to access one or more medical data repositories storing patient medical data. Further, it should be understood that the method 600 herein described may be executed by multiple devices within the same environment at the same time. Further, the method 600 may be executed by the device for multiple different network paths available to the device. For example, the method 600 may be executed to monitor connection quality for LAN and WLAN paths at the same time. As an example, the device may be configured to maintain connections via multiple network connection paths at the same time (e.g., link states are up for multiple paths) even if the data is being transmitted over only one of the paths. For example, the device may maintain connection with both LAN and WLAN while only transmitting data over one of them.

At 602, method 600 includes determining current operating state. The operating state may include a current link state of the device, which may indicate which network connection path is currently in use. For example, the operating state may indicate whether a given network connection path is currently connected or not connected. For example, when the method 600 is executed for a WLAN path and may thus determine if the device is connected or not connected over the WLAN path. The current operating state may also indicate whether data is being transmitted over the given connection path.

At 604, method 600 includes determining, for a given connection path, whether the link state is up as based on the current operating state. For example, the method 600 may be executed for a WLAN path and may thus determine whether the WLAN link state is up (e.g., is connected). If the WLAN link state is up, method 600 proceeds to 606. If the WLAN link state is not up, method 600 proceeds to 602 to again determine the current operating state. In this way, if the path is available to the device (e.g., is connected), CQIs of the path may be determined, as will be described below.

At 606, method 600 includes checking the connection path. To check the connection path, the client may poll the server to determine if the connection path is available.

At 608, method 600 includes calculating the path CQI. The device may include a CQM client, as described in FIG. 1, which may periodically poll the server to determine parameters including amount of data delivered, time period of delivery, and the like. Other parameters, such as amount of data sent may be obtained from the device itself. As described with respect to method 300 of FIG. 3, in one non-limiting use case scenario, calculating the path CQI may include determining a reliability indicator and a latency indicator as described above with respect to FIG. 3. In such an example: the CQI may be a product of the reliability indicator and the latency indicator, as described by equation (1); the reliability indicator may be a ratio of delivered data to sent data, as described by equation (2), therein indicating the amount of data that is sent over the path that is delivered; and the latency indicator, as described by equation (3), may be a mean of the average latency indicator and the minimum latency indicator for a given latency threshold. The latency indicator thus indicates quality of the speed of transmission.

As herein described, the method 600 may be executed in a continuous, iterative manner, whereby CQIs are repeatedly calculated for the given connection path as the CQM client of the device polls the server periodically. Further, the method 600 may be executed continuously for all paths for which the device is configured to connect to. Thus, all available paths may have CQIs determined therefor, allowing for a comparison therebetween in the form of a path order that orders the paths by their connection quality. In this way, the device may be able to determine which path is of the current highest quality and thus may connect to the server via the highest quality path, thereby increasing overall reliability and speed of data transmission.

Turning now to FIG. 7, a flowchart illustrating a method 700 for updating path connection based on determined quality metrics. The method 700 may be executed by one or more processors of a device according to instructions stored in non-transitory memory of a device. For example, the method 700 may be executed by processor 104 according to instructions stored in non-transitory memory 106 of the first device 102. As an example, the device may be one of a plurality of devices in a distributed network system wherein multiple devices are connected to a central server. The distributed system may be incorporated into a hospital environment, in some examples, where each device is a care provider device configured to access one or more medical data repositories storing patient medical data. Further, it should be understood that while the method 700 is herein described for a given network connection path, the method 700 may be executed by multiple devices within the same environment at the same time.

At 702, method 700 includes determining a current path order for the device. The current path order for the device may inform the order of preference of connection for available network connection paths to the device. The current path order may order the available paths based on determined connection quality, whereby a path with the highest CQI is considered a most preferred path for the device. The current path order may have been set by previously determined CQIs.

At 704, method 700 includes determining CQIs for available paths. As described with respect to FIG. 6, for each path with in a link up state, a CQI may be determined. The CQIs may be determined by the CQM client of the device, which periodically polls the server for data to determine quality indicators. The CQM client may store polled and internally recorded data on a sliding window. The CQIs may be determined for newly polled data and thus may be different or the same compared to the previously determined CQIs. The newly determined CQIs may thus result in a new path order, as noted at 706.

At 708, method 700 determines whether the path order is changed. The path order may be changed when the new path order is different compared to the current path order. For example, in an example when the path order is changed, the current path order may prioritize LAN over WLAN when the previously determined CQI of the LAN path is higher than the previously determined CQI of the WLAN path and the new path order may prioritize WLAN over LAN when the newly determined CQI of the WLAN path is higher than the newly determined CQI of the LAN path. If the path order is changed, method 700 proceeds to 710. If the path order is unchanged, method 700 returns to 702.

At 710, method 700 determines if a hysteresis lag period has elapsed. Similar to as described with respect to FIG. 5, the hysteresis period may be a pre-defined period of lag, whereby an update in path usage may not be performed until after the hysteresis period is elapsed. In effect, the hysteresis period reduces rapid cycling between paths due to brief changes in connectivity quality. If the hysteresis period has not elapsed, the method 700 returns to 702 to repeat determination of path order. In this way, the device may collect data and determine CQIs for available paths more than once to confirm that the change in path order is not a result of a brief or otherwise inconsequential change in connection quality. Thus, the method 700 essential waits for the hysteresis period to elapse while confirming that the change in connection quality persists. If the hysteresis period has elapsed, method 700 proceeds to 712.

At 712, method 700 determines whether the difference in CQIs is more than a hysteresis offset of the currently used path. For example, each available connection may include a hysteresis offset that is to be exceeded, for example by a difference in connection quality (as determined by CQI or other metric), in order for a change in path usage to be performed. For example, if the difference in CQI by which a first path is above a second path in the path order does not exceed the hysteresis offset of the second path (e.g., the currently in use path), the device may maintain connection to the server via the second path rather than switching to the first path. However, if the difference in CQI does exceed the hysteresis offset of the second path, the device may switch to transmitting data to and receiving data from the server via the first path. If the difference in CQIs is more than the hysteresis offset of the currently used path, method 700 proceeds to 714. If the difference in CQIs is not more than the hysteresis offset, method 700 returns to 702.

At 714, method 700 includes connecting the device to the server via the path with the greater CQI. As a non-limiting example, a first network connection path may be in use by the device, transmitting data to and receiving data from the server over the first network connection path according to the current path order. When the new path order is determined and the hysteresis periods are accounted for, a second network connection path may be prioritized over the first network connection path due to the second path having a greater CQI value. Thus, the device may switch to using the second network connection path to transmit data to and receive data from the server.

In this way, the device may connect to the server over a network connection path that is of the highest connection quality at the time. The order of prioritization of available paths (e.g., the path order) may be continuously updated and checked via a hysteresis period, thereby ensuring stability of network connection by reducing fluctuations in chosen path due to blips in connection quality change. By continuously determining CQIs and updating the path order based thereon, the device may connect to the server via the available path with the highest connection quality rather than based on a predetermined path order. In this way, interruptions in connection due to variability that result in poor quality due to link failures, congestion, delays, data losses, disconnections, security policies, routing changes, and network configuration changes may be reduced. As a result, reliability and speed of data transfer may be increased. Further, CQIs, path order selection, and path connection may be performed simultaneously for multiple devices within the same environment. Thus, different devices may connect to the same server over different paths according to individual path orders. In this way, each device may individually determine its highest quality connection path and connect to the server of it, thereby increasing the overall connection quality of the network environment.

Turning now to FIG. 8, a flowchart illustrating a method 800 for adaptive logging in a network system is shown. The method 800 may be executed by one or more processors of a device according to instructions stored in non-transitory memory of a device. For example, the method 800 may be executed by processor 104 according to instructions stored in non-transitory memory 106 of the first device 102. As an example, the device may be one of a plurality of devices in a distributed network system wherein multiple devices are connected to a central server. The distributed system may be incorporated into a hospital environment, in some examples, where each device is a care provider device configured to access one or more medical data repositories storing patient medical data. Further, it should be understood that while the method 800 is herein described for a given device, the method 800 may be executed by multiple devices within the same environment at the same time.

At 802, method 800 includes determining current operating state. The current operating state may include a current connection path, a current path order, status of paths, including which paths are available, CQIs of each available path, a threshold CQI for each path, and the like. As noted, each available path may have a predetermined, predefined, or configured threshold CQI. For example, if the CQI for the path is within the range (e.g., above the threshold), the device may consider the path as functioning, even if it is not topping the path order.

At 804, method 800 determines if a CQI update event is indicated. The CQI update event may occur after a new polling of the server, in some examples. If the CQI update event is indicated, method 800 proceeds to 806. If the CQI update event is not indicated, method 800 returns to 802.

At 806, method 800 determines if a CQI range is changed. The CQI range may determine if verbose logging is used. For example, when CQI is within a first range considered poor connection quality, verbose logging is used. When CQI is within a second range considered good connection quality, verbose logging is not used. If the CQI range is changed, method 800 proceeds to 808. If the CQI range is unchanged, method 800 returns to 802. In some examples, determination of CQI range change may be performed for a currently in use path.

At 808, method 800 determines if the calculated CQI is below the predefined threshold for the given path. As noted, a calculated CQI for a path below the predefined threshold therefor may indicate that the path is not functioning as per baseline. If a CQI of the currently used path is below threshold, method 800 proceeds to 810. If the CQI of the currently used path is above the threshold, method 800 proceeds to 812.

At 810, method 800 includes enabling verbose logging (if not already enabled). Verbose logging may be a setting within the device that records extensive details about the internal workings of the device's connection system. For example, the details recorded when verbose logging is on may include information that is not usually logged under normal circumstances, such as specific variable values, status of components, and the like. Verbose logging may thus enable identification of performance issues or inefficiencies as well as capture conditions and events that led to the drop in CQI value. In some examples, verbose logging may be enabled after a hysteresis period, whereby if the CQI drops below the threshold for a persisted time period (e.g., longer than the hysteresis period), verbose logging may be enabled. However, if the CQI drops below the threshold for a brief period of time (e.g., less than the hysteresis period), verbose logging may not be enabled, thereby reducing the processing demands on the device that verbose logging would cause. Following 810, method 800 returns to 802.

At 812, method 800 includes disabling verbose logging (if not already disabled). Verbose logging, while allowing for identification and diagnosis of inefficiencies or performance issues with given network connection paths, generates large amounts of data. This data demands increased processing power and thus may slow down processing speeds of the device. Thus, when the connection paths are functioning as expected (e.g., when CQIs thereof are above the threshold), verbose logging may be disabled so as to reduce the processing demands on the device.

The threshold CQI value for each network connection path may be a configurable value, in some examples. Configuring the threshold value may thus allow for opportunistic and proactive enabling of verbose logging when the paths are performing below an expected quality without burdening the device with continuous verbose logs when the paths are performing as expected. In this way, the device may be able to calculate connection quality metrics, select a network connection path based on the calculated connection quality metrics, and opportunistically enable verbose logging to diagnose issues when a connection path is not performing to an expected quality.

The technical effect of the systems and methods disclosed herein is that devices within a network environment may connect to a server via a network connection path with a highest quality metric, thereby increasing the overall reliability and speed of connection within the environment. By periodically and continuously polling the server for device-specific data, a CQI value for each available network connection path may be determined. The CQI for each path may be a value that represents, statistically, the quality of the connection to the server based on reliability, latency, throughput, jitter, errors and delivery order. A path order for path selection may thus be determined based on statistical quality metrics. In this way, each device may connect to the server via the path with the highest connection quality.

Further, in a hospital environment with a distributed system wherein multiple devices, such as laptop computers, desktop monitors, tablets, and/or smart phones are connected to a central server and the multiple devices are all sending data upstream to the server in real-time, as herein disclosed, network connectivity issues may be reduced by continuously monitoring network connectivity and updating path selection based on connection quality. For example, when congestion occurs when multiple devices are connecting to the server via WLAN via the same AP, the systems and methods herein described may allow for detection of a different network connection path with a higher connection quality, via calculation of CQIs, for one or more of the multiple devices. Those devices within the hospital environment may connect to the server via the different network. Thus, the real-time data transfer between the devices and the server may be optimized. In this way, with higher connection quality and reduced congestion, data transmission for access to medical data repositories may be more reliable and quicker, thus reducing any delays in patient care that may result from network connectivity issues.

The disclosure also provides support for a method, comprising: determining, for each device of one or more devices, connection quality indicators (CQIs) for one or more available network connection paths, and connecting each device to a server via a respective network connection path with a highest CQI of the one or more available network connection paths. In a first example of the method, the one or more available network connection paths include one or more of a local area network (LAN) path, a wireless local area network (WLAN) path, and a wide area network (WAN) path. In a second example of the method, optionally including the first example, the CQI for each of the one or more available network connection paths of each device of the one or more devices is calculated using one or more quality metrics including reliability, latency, throughput, jitter, errors and delivery order. In a third example of the method, optionally including one or both of the first and second examples, determining CQIs for the one or more available network connection paths includes polling the server periodically. In a fourth example of the method, optionally including one or more or each of the first through third examples, the method further comprises: iteratively determining CQIs for the one or more available network connection paths of each device and updating connection to the server for each device based on resultant path orders. In a fifth example of the method, optionally including one or more or each of the first through fourth examples, connecting to the server for a given device via the respective network connection path with the highest CQI comprises updating network connection from a first network connection path to a second network connection path when the second network connection path is the network connection path with the highest CQI. In a sixth example of the method, optionally including one or more or each of the first through fifth examples, the method further comprises: waiting until a hysteresis period is elapsed prior to updating the network connection from the first network connection path to the second network connection path. In a seventh example of the method, optionally including one or more or each of the first through sixth examples, the method further comprises:, following lapse of the hysteresis period, determining if a difference is greater than a hysteresis offset of the first network connection path.

The disclosure also provides support for a system, comprising: a server, a plurality of devices, wherein each given device of the plurality of devices comprises one or more processors configured to execute instructions stored in non-transitory memory that when executed cause the one or more processors to: determine, for each of one or more available network connection paths, a connection quality metric, determining a path order based on the connection quality metric of each of the one or more available network connection paths, and connect to the server via one of the one or more available network connection paths based on the path order. In a first example of the system, the connection quality metric is a connection quality indicator (CQI) determined based on one or more data transmission characteristics, including reliability, latency, throughput, jitter, errors and delivery order, between the given device and the server. In a second example of the system, optionally including the first example, each device of the plurality of devices is configured to iteratively update the path order based on iteratively determined connection quality metrics for each available network connection path of the one or more available network connection paths. In a third example of the system, optionally including one or both of the first and second examples, the one or more processors are further configured to execute instructions stored in memory that when executed cause the one or more processors to: in response to determination that the determined connection quality metric is below a threshold, enable verbose logging, and in response to determination that the determined connection quality metric is above a threshold, disable verbose logging. In a fourth example of the system, optionally including one or more or each of the first through third examples to connect to the server via one of the one or more available network connection paths based on the path order, the one or more processors are configured to switch connection to the server via a first path to a second path, when the second path is the one of the one or more available network connection paths. In a fifth example of the system, optionally including one or more or each of the first through fourth examples to switch connection to the server via the first path to the second path, the one or more processors are configured to determine that a hysteresis lag period has elapsed. In a sixth example of the system, optionally including one or more or each of the first through fifth examples, the one or more processors are further configured to determine whether the CQI for a currently used connection path is below a threshold, and in response to determining that the CQI is below the threshold, enabling verbose logging for the device and, in response to determining that the CQI is above the threshold, disabling verbose logging for the device.

The disclosure also provides support for a method, comprising: determining a current path order of one or more network connection paths for a device, determining a connection quality indicator (CQI) value for each of the one or more network connection paths, determining, based on the CQI value of each of the one or more network connection paths, a new path order, in response to determination that the new path order is different from the current path order, update connection of the device to a server based on the new path order. In a first example of the method, updating connection of the device to the server based on the new path order comprises changing connection to the server from via a first path to via a second path, wherein the second path has a higher CQI value than the first path in the new path order. In a second example of the method, optionally including the first example, the method further comprises:, in response to determination that the new path order is different from the current path order, determining that a hysteresis lag period has elapsed. In a third example of the method, optionally including one or both of the first and second examples, the method further comprises:, in response to determining that the hysteresis lag period has elapsed, determining if a difference is greater than a hysteresis offset of the first path. In a fourth example of the method, optionally including one or more or each of the first through third examples, the method further comprises:, in response to determining that the CQI for one or more of the one or more network connection paths is below a threshold, enabling verbose logging for the device and, in response to determining that the CQI for one or more of the one or more network connection paths is above the threshold, disabling verbose logging for the device.

As used herein, an element or step recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property. The terms "including" and "in which" are used as the plain-language equivalents of the respective terms "comprising" and "wherein." Moreover, the terms "first," "second," and "third," etc. are used merely as labels, and are not intended to impose numerical requirements or a particular positional order on their objects.

This written description uses examples to disclose the invention, including the best mode, and also to enable a person of ordinary skill in the relevant art to practice the invention, including making and using any devices or systems and performing any incorporated methods. The patentable scope of the invention is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

**Claims**

1. A method, comprising:

   determining, for each device of one or more devices, connection quality indicators (CQIs) for one or more available network connection paths (302); and
   connecting each device to a server via a respective network connection path with a highest CQI of the one or more available network connection paths (308).

2. The method of claim 1, wherein the one or more available network connection paths include one or more of a local area network (LAN) path, a wireless local area network (WLAN) path, and a wide area network (WAN) path (304).

3. The method of claim 1, wherein the CQI for each of the one or more available network connection paths of each device of the one or more devices is calculated using one or more quality metrics including reliability, latency, throughput, jitter, errors and delivery order (302).

4. The method of claim 1, wherein determining CQIs for the one or more available network connection paths includes polling the server periodically (300).

5. The method of claim 1, further comprising iteratively determining CQIs for the one or more available network connection paths of each device and updating connection to the server for each device based on resultant path orders (300).

6. The method of claim 1, wherein connecting to the server for a given device via the respective network connection path with the highest CQI comprises updating network connection from a first network connection path to a second network connection path when the second network connection path is the network connection path with the highest CQI (714).

7. The method of claim 6, further comprising waiting until a hysteresis period is elapsed prior to updating the network connection from the first network connection path to the second network connection path (710).

8. The method of claim 7, further comprising, following lapse of the hysteresis period, determining if a difference is greater than a hysteresis offset of the first network connection path (712).

9. A system (100), comprising:

    a server (150);
    a plurality of devices (102, 122), wherein each given device of the plurality of devices comprises one or more processors (104, 124) configured to execute instructions stored in non-transitory memory (106, 126) that when executed cause the one or more processors to:

        determine, for each of one or more available network connection paths, a connection quality metric (304);
        determining a path order based on the connection quality metric of each of the one or more available network connection paths (306); and
        connect to the server via one of the one or more available network connection paths based on the path order (308).

10. The system of claim 9, wherein the connection quality metric is a connection quality indicator (CQI) determined based on one or more data transmission characteristics, including reliability, latency, throughput, jitter, errors and delivery order, between the given device and the server (304).

11. The system of claim 9, wherein each device of the plurality of devices is configured to iteratively update the path order based on iteratively determined connection quality metrics for each available network connection path of the one or more available network connection paths (700).

12. The system of claim 9, wherein the one or more processors are further configured to execute instructions stored in memory that when executed cause the one or more processors to:

        in response to determination that the determined connection quality metric is below a threshold, enable verbose logging (810); and
        in response to determination that the determined connection quality metric is above a threshold, disable verbose logging (812).

13. The system of claim 9, wherein, to connect to the server via one of the one or more available network connection paths based on the path order, the one or more processors are configured to switch connection to the server via a first path to a second path, when the second path is the one of the one or more available network connection paths (714).

14. The system of claim 13, wherein, to switch connection to the server via the first path to the second path, the one or more processors are configured to determine that a hysteresis lag period has elapsed (710).

15. The system of claim 9, wherein the one or more processors are further configured to determine whether the CQI for a currently used connection path is below a threshold, and in response to determining that the CQI is below the threshold, enabling verbose logging for the device and, in response to determining that the CQI is above the threshold, disabling verbose logging for the device (810, 812).

FIG. 1

EP 4 712 429 A1

FIG. 2

300

START

302

DETERMINE CONNECTION QUALITY FOR A
PLURALITY OF PATHS (SEE FIG. 6)

DETERMINE CQI FOR EACH PATH 304

306

DETERMINE PATH ORDER BASED ON CQIs

308

CONNECT TO SERVER VIA PATH BASED ON
PATH ORDER

END

# FIG. 3

FIG. 4

START

502

DETERMINE CURRENT OPERATING STATE

504

LINK STATE CHANGE? — NO

YES

506

LAN LINK CHANGED TO DOWN? — NO → ADD NETWORK CONNECTION VIA LAN — 510

YES

508

REMOVE NETWORK CONNECTION VIA LAN

512

ASSIGN HIGH METRIC TO LAN DEFAULT ROUTE

514

HYSTERESIS PERIOD ELAPSED? — NO

YES

516

CONNECTED VIA LAN? — NO

YES

518

ADD HOST ROUTE VIA LAN

520

ADD LAN DEFAULT ROUTE WITH LOW METRIC

500

FIG. 5

START

DETERMINE CURRENT OPERATING
STATE ⌐602

LINK UP? ⌐604 NO

YES

CHECK CONNECTION PATH ⌐606

CALCULATE PATH CQI ⌐608

END

FIG. 6

START

700

DETERMINE CURRENT PATH ORDER — 702

DETERMINE CQIs FOR PATHS — 704

DETERMINE NEW PATH ORDER — 706

PATH ORDER CHANGED? — 708    NO

YES

HYSTERESIS LAG PERIOD ELAPSED? — 710    NO

YES

MORE DIFFERENCE THAN HYSTERESIS OFFSET? — 712    NO

YES

CONNECT TO SERVER VIA PATH WITH GREATER CQI — 714

END

FIG. 7

FIG. 8

## EUROPEAN SEARCH REPORT

Europäisches
Patentamt
European
Patent Office
Office européen
des brevets

**Application Number**

EP 25 19 7964

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/200036 A1 (EGNER WILL A [US] ET AL) 17 July 2014 (2014-07-17)<br>* abstract *<br>* paragraphs [0075] - [0088]; figure 5 *<br>* paragraphs [0106] - [0113]; figure 7 *<br>----- | 1-15 | INV.<br>H04L45/00<br>H04W40/12 |
| X | US 2023/353482 A1 (MEANS ISRAEL [US] ET AL) 2 November 2023 (2023-11-02)<br>* abstract *<br>* paragraphs [0045] - [0055], [0059] *<br>* paragraphs [0074], [0081], [0087] *<br>* paragraphs [0111] - [0113] *<br>----- | 1-6,<br>9-11,13 | |

**TECHNICAL FIELDS SEARCHED (IPC)**

H04L
H04W

The present search report has been drawn up for all claims

| Place of search | Date of completion of the search | Examiner |
|---|---|---|
| The Hague | 13 January 2026 | Jurca, Dan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 7964

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2026

| Patent document cited in search report | Publication date | Patent family member(s) | Publication date |
|---|---|---|---|
| US 2014200036 A1 | 17-07-2014 | NONE | |
| US 2023353482 A1 | 02-11-2023 | NONE | |

EPO FORM P0459

For more details about this annex : see Official Journal of the European Patent Office, No. 12/82